(19) Europäisches Patentamt / European Patent Office / Office européen des brevets

(11) **EP 2 540 462 B1**

(12) **FASCICULE DE BREVET EUROPEEN**

(45) Date de publication et mention
de la délivrance du brevet:
**15.01.2014 Bulletin 2014/03**

(51) Int Cl.:
**B26D 1/02** *(2006.01)*       **B26D 3/28** *(2006.01)*
**B26D 7/06** *(2006.01)*       **B26D 7/30** *(2006.01)*
**A22C 17/00** *(2006.01)*

(21) Numéro de dépôt: **12305747.3**

(22) Date de dépôt: **26.06.2012**

(54) **Procédé et installation pour la coupe en tranches d'une denrée alimentaire, et pour l'individualisation des tranches obtenues**

Verfahren und Anlage zum Schneiden eines Nahrungsmittels und zur Trennung der einzelnen Scheiben

Method and installation for slicing a foodstuff, and for individualising the slices obtained

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.06.2011 FR 1155744**

(43) Date de publication de la demande:
**02.01.2013 Bulletin 2013/01**

(73) Titulaire: **Gastronome
44150 Ancenis (FR)**

(72) Inventeurs:
• **Pichard, Bérangère
85590 TREIZE VENTS (FR)**
• **Liaigre, Guy
79250 NUEIL LES AUBIERS (FR)**

(74) Mandataire: **Coralis Harle
14-16 Rue Ballu
75009 Paris (FR)**

(56) Documents cités:
WO-A1-00/22934       WO-A1-03/031127
US-A1- 2006 162 518   US-A1- 2007 204 735

**Description**

La présente invention concerne un procédé et une installation pour la coupe en tranches d'une denrée alimentaire, par exemple un morceau de viande, et pour l'individualisation des tranches obtenues.

Dans le domaine de l'industrie agro-alimentaire, certaines denrées sont découpées en tranches pour leur conditionnement et leur présentation à la vente.

En particulier, certains morceaux de viande, par exemple les filets de dinde, sont découpés en tranches afin de les commercialiser sous forme d'escalopes ; en outre, bien souvent, on cherche à obtenir de telles escalopes avec un poids défini et relativement précis, par exemple compris entre 100 et 140 grammes pour les escalopes de dinde.

Ces opérations peuvent être mises en oeuvre d'une manière automatisée ou semi-automatisée, au moyen d'installations dédiées pour la coupe et l'individualisation des tranches.

Certaines de ces installations de coupe/individualisation comportent des couteaux qui s'étendent de manière approximativement horizontale. La denrée à trancher est guidée le long de ces couteaux par des moyens de convoyage, pour sa découpe en une ou plusieurs tranches.

Les couteaux équipant de telles installations sont généralement réglables en hauteur par rapport aux moyens de convoyage, de telle sorte que le morceau peut être coupé en une ou plusieurs tranches d'épaisseurs souhaitées.

Mais les installations correspondantes ne sont pas satisfaisantes, en ce sens que le réglage des couteaux s'effectue uniquement en fonction d'une consigne d'épaisseur ou de poids précisée par l'opérateur.

Par exemple, l'installation et le procédé décrits dans le document US-2006/0162518 apportent une solution pour la coupe de tranches dans une denrée alimentaire, qui présentent chacune un poids correspondant à une consigne prédéterminée par l'opérateur.

Le poids de chaque tranche est déterminé par une hauteur de tranchage qui est pilotée automatiquement en fonction du poids initial de cette denrée et de ses dimensions.

Cependant, en pratique, cette approche selon l'état de la technique génère généralement un morceau final dont le poids est inférieur à une limite minimale de commercialisation, constituant alors une chute ou un reliquat de tranchage.

En outre, même si son poids est acceptable commercialement, ce morceau final présente actuellement un poids variable, non maitrisé, qui complique la constitution de lots dont les poids totaux sont au moins relativement homogènes.

C'est en particulier le cas pour les denrées de formes complexes, où des tranches de mêmes épaisseurs présentent généralement des volumes différents et par conséquent des poids différents.

Actuellement, la découpe automatique d'escalopes de dinde génère ainsi jusqu'à 10% de perte.

Pour remédier à cet inconvénient, la demanderesse a développé un procédé et une installation qui présentent l'intérêt de générer des tranches dont les poids respectifs sont contrôlés individuellement, ceci d'une manière très précise.

Cela permet de contrôler efficacement le poids de chaque tranche générée en fonction d'une valeur de consigne adaptable à façon.

Une telle invention permet de réduire sensiblement, voire de supprimer, les pertes lors du tranchage d'une denrée. Elle est en plus intéressante du fait de sa précision de coupe, de son efficacité et des hautes cadences susceptibles d'être obtenues.

Elle permet encore le traitement en série de morceaux de formes très différentes, sans avoir à réaliser des réglages mécaniques complexes.

Cette invention permet également d'automatiser la mise en barquettes des tranches générées, en particulier du fait de leur individualisation.

La présente invention concerne donc un procédé pour la coupe en tranches d'une denrée alimentaire, par exemple un morceau de viande, et pour l'individualisation des tranches obtenues.

Il comprend au moins les étapes (a) à (d) suivantes :

(a) au moins une étape d'analyse de ladite denrée à trancher en appui sur une surface de réception, comprenant - une opération de détermination des dimensions d'au moins une partie de ladite denrée à trancher, et - une opération de pesée de ladite denrée à trancher pour déterminer son poids,

(b) au moins une étape de traitement de données pour déterminer l'épaisseur des tranches à couper dans ladite denrée alimentaire, tenant compte des dimensions déterminées lors de ladite étape d'analyse ainsi que d'une consigne de poids pour chacune desdites tranches,

(c) au moins une étape de coupe de chacune des tranches dans ladite denrée alimentaire, selon un plan de coupe parallèle à ladite surface de réception, pour obtenir chacune desdites tranches avec une épaisseur déterminée à l'issue de ladite étape de traitement, et

(d) au moins une étape d'individualisation desdites tranches obtenues à l'issue de ladite étape de coupe.

Selon l'invention, l'étape de traitement de données comprend encore, tenant compte du poids de ladite denrée alimentaire issu de ladite opération de pesée et d'une gamme de poids prédéterminée pour chacune desdites tranches, une opération de détermination : - du nombre de tranches à couper dans ladite denrée alimentaire, et - de ladite consigne de poids pour chacune desdites tranches, chaque consigne de poids étant comprise dans ladite gamme de poids prédéterminée.

Ainsi, en pratique, cette solution technique selon l'invention permet de générer un nombre adapté de tranches dans une denrée, présentant chacune un poids contrôlé.

L'invention permet ainsi de réduire, voire de supprimer, les chutes ou reliquats de tranchage.

Selon une forme de réalisation préférée, l'étape (b) de traitement de données pour déterminer l'épaisseur d'au moins une tranche à couper dans la denrée alimentaire tient compte d'une consigne de volume qui découle de la masse volumique de ladite denrée à trancher et d'une consigne de poids pour ladite tranche (appartenant à une gamme de poids déterminée).

D'autres caractéristiques avantageuses de réalisation, pouvant être prises séparément ou en combinaison, sont indiquées ci-dessous :

- la ou les étapes de coupe (c) sont commandées par la ou les étapes d'analyse (b), de sorte que les tranches générées dans ladite denrée alimentaire présentent chacune des épaisseurs propres indépendantes les unes des autres ; les poids peuvent être identiques, ou différents les uns par rapport aux autres dans une gamme déterminée, par exemple pour obtenir une répartition optimisant le conditionnement sans perte de matière ;
- le procédé comprend une unique étape d'analyse (a) suivie d'une unique étape de traitement (b), au cours desquelles est déterminée l'épaisseur de chacune des tranches à couper dans ladite denrée alimentaire, lesquelles étapes d'analyse (a) et de traitement (b) sont mises en oeuvre préalablement à une ou plusieurs étapes de coupe (c) et d'individualisation (d) ; dans ce cas, l'opération de détermination de dimensions, au cours de l'étape d'analyse (a), consiste avantageusement en une opération de détermination des dimensions volumiques de ladite denrée alimentaire entière à trancher ;

- la succession d'étapes (a) à (d) est reproduite pour la coupe de chaque tranche d'épaisseur déterminée dans ladite denrée alimentaire, ou dans la partie restante de ladite denrée alimentaire après tranchage ; dans ce cas, l'étape d'analyse (a) comprend avantageusement une opération de détermination des dimensions surfaciques de la face d'appui de la denrée alimentaire à trancher, ou de ladite partie restante de ladite denrée alimentaire après tranchage, qui est en appui sur la surface de réception, et chaque étape de coupe (c) consiste à trancher ladite denrée alimentaire, ou ladite partie restante de ladite denrée alimentaire, selon un plan de coupe parallèle à ladite surface de réception pour définir entre eux l'épaisseur de ladite tranche ;
- au cours de la ou des étapes coupe (c), la denrée alimentaire est dans un état comprimé.

La présente invention concerne également une installation pour la coupe en tranches d'une denrée alimentaire, et pour l'individualisation des tranches obtenues, laquelle installation comprend des moyens pour le convoyage de ladite denrée alimentaire et desdites tranches issues de ladite denrée alimentaire, sur une surface de réception, lesquels moyens de convoyage coopèrent avec :

(a) des moyens de détermination des dimensions d'au moins une partie de ladite denrée alimentaire à trancher,
(b) des moyens de pesée de ladite denrée alimentaire à trancher, disposés en amont de moyens de coupe,
(c) des moyens de coupe de ladite denrée alimentaire en tranches, selon un plan de coupe parallèle à ladite surface de réception, avec chacune une épaisseur déterminée,
(d) des moyens d'individualisation desdites tranches obtenues, et
(e) des moyens de commande pour le pilotage de ladite installation, comportant des moyens de traitement de données pour déterminer l'épaisseur de chacune des tranches à couper dans ladite denrée alimentaire, tenant compte desdites dimensions déterminées par lesdits moyens de détermination de dimensions et d'une consigne de poids déterminée pour chacune desdits tranches.

Selon l'invention, les moyens de traitement de données comportent des moyens pour déterminer, tenant compte du poids de ladite denrée alimentaire et d'une gamme de poids prédéterminée pour chacune desdites tranches : - le nombre de tranches à couper dans ladite denrée alimentaire, et - ladite consigne de poids pour chacune desdites tranches, chaque consigne de poids étant comprise dans ladite gamme de poids prédéterminée.

Selon une forme de réalisation préférée, les moyens de commande comportent avantageusement des moyens de traitement de données pour déterminer l'épaisseur de chacune des tranches à couper dans la denrée alimentaire tenant compte d'une consigne de volume découlant de la masse volumique de ladite denrée à trancher et d'une consigne de poids pour chacune desdites tranches (appartenant à une gamme de poids déterminée).

Selon une caractéristique, les moyens de coupe comportent avantageusement (i) plusieurs organes de tranchage et (ii) des moyens pour ajuster la hauteur de chacun de ces organes de tranchage par rapport aux moyens de convoyage afin de définir l'épaisseur de chacune des tranches.

Dans ce cas, les organes de tranchage sont avantageusement disposés en série par rapport aux moyens de convoyage.

Les moyens de détermination de dimensions consistent alors avantageusement en des organes capteur qui sont disposés chacun en amont de l'un des organes de tranchage et qui permettent la détermination des dimensions surfaciques de la face d'appui de la denrée alimentaire, ou de la partie restante de cette denrée alimentaire, qui est en appui sur la surface de réception constitutive des moyens de convoyage ; chaque organe de tranchage assure un plan de coupe parallèle à ladite surface de réception pour définir entre eux l'épaisseur de ladite tranche.

De manière alternative, les moyens de détermination de dimensions sont avantageusement disposés en amont des moyens de coupe ; et ils consistent en des moyens pour la détermination des dimensions volumiques de ladite denrée alimentaire à trancher.

Encore dans le cas d'organes de tranchage en série, les moyens d'individualisation sont constitués par les moyens de convoyage qui comprennent au moins :

(i) plusieurs convoyeurs primaires, agencés en série et s'étendant chacun sous l'un desdits organes de tranchage, pour le convoyage, d'une part, de ladite denrée alimentaire ou d'une partie de ladite denrée alimentaire, en amont dudit organe de tranchage et, d'autre part, de la tranche de denrée générée, en aval dudit organe de tranchage, et

(ii) un convoyeur collecteur, situé en aval desdits convoyeurs primaires, pour recevoir chacune des tranches générées par les organes de tranchage.

Dans ce dernier cas, les moyens de convoyage comportent encore avantageusement des convoyeurs secondaires, implantés chacun entre l'un des convoyeurs primaires et le convoyeur collecteur, dont la vitesse de cheminement est pilotée par les moyens de commande notamment pour contrôler la dépose des tranches sur le convoyeur collecteur.

Selon encore une autre caractéristique, l'installation comporte des moyens pour comprimer verticalement ladite denrée alimentaire au niveau des moyens de coupe, de manière à gommer les irrégularités de la crête (ou de la surface supérieure) du morceau à trancher ou à aplanir la surface supérieure de ce morceau, afin d'homogénéiser les tranches générées.

Ces moyens de compression consistent par exemple en un contre-tapis qui est ajustable en hauteur par des moyens de réglage manuel ou automatisé (par exemple un servomoteur piloté par les moyens de commande), pour tenir compte notamment du poids et/ou de la surface d'appui et/ou de la hauteur du morceau à trancher.

L'invention sera encore illustrée, sans être aucunement limitée, par la description suivante de plusieurs modes de réalisation particuliers, en relation avec les dessins annexés dans lesquels :

- la figure 1 est une représentation schématique d'une première installation selon l'invention ;
- la figure 2 est en un organigramme destiné à illustrer les principales étapes du procédé mis en oeuvre par l'installation selon la figure 1, pour déterminer le nombre et l'épaisseur des tranches à couper dans une denrée primaire à découper ;
- les figures 3A à 3C illustrent les principales étapes de la cinématique mise en oeuvre par l'installation selon la figure 1, lors de la coupe de la première tranche dans la denrée primaire ;
- la figure 4 est une représentation schématique d'une autre forme de réalisation possible d'une installation selon l'invention ;
- la figure 5 est en un organigramme destiné à illustrer les principales étapes du procédé mis en oeuvre par l'installation selon la figure 4, afin de déterminer le nombre et l'épaisseur des tranches à couper dans la denrée primaire à découper.

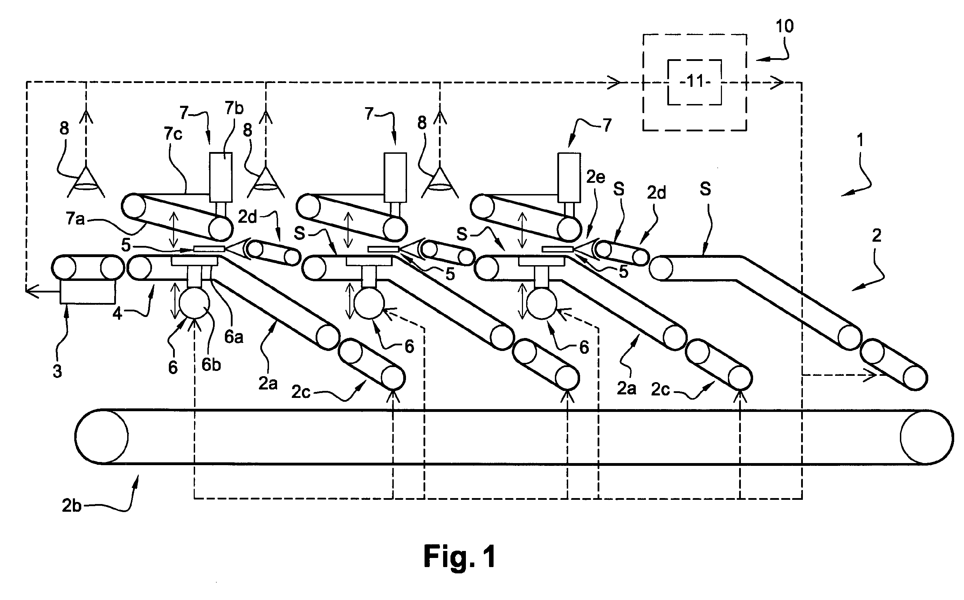

L'installation 1, décrite en relation avec les figures 1 à 3, est adaptée pour la coupe en tranches d'une denrée alimentaire, et pour l'individualisation des tranches obtenues.

Cette installation 1 est en particulier efficace dans une application de découpe d'un filet de dinde en plusieurs tranches ; les tranches ainsi obtenues sont souvent désignées sous l'appellation de « escalope ».

Bien entendu, d'autres types de morceaux de viande, voire d'autres types de denrées alimentaires, seraient susceptibles d'être découpés au sein d'une telle installation.

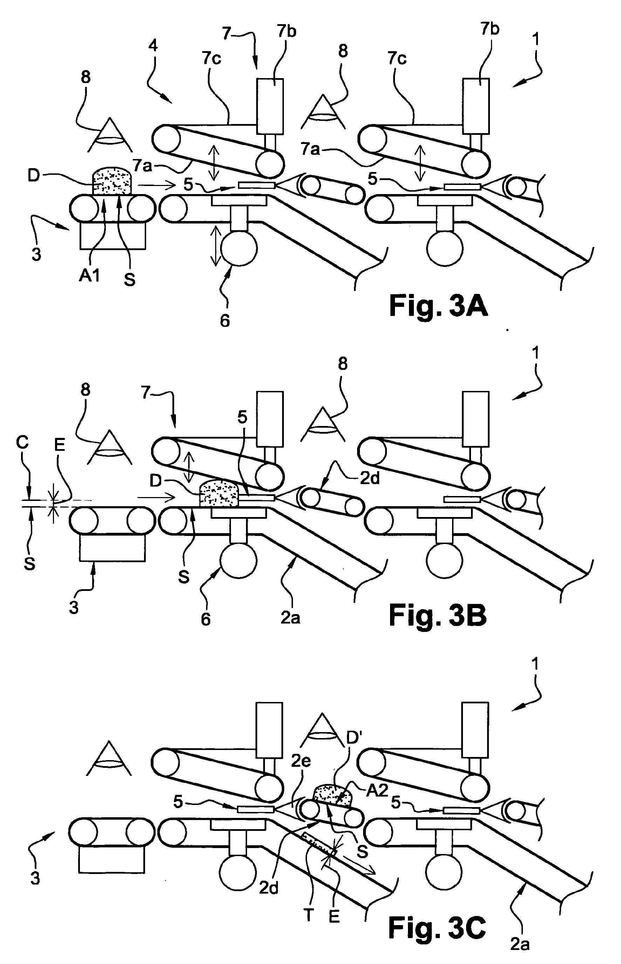

Dans la suite de la description, ainsi que sur les figures 3A à 3C, la denrée primaire est désignée par le repère « D » et les tranches (ou escalopes) obtenues sont désignées par le repère « T » ; la partie restant d'une denrée D, dans laquelle une ou plusieurs de ces tranches T ont été coupées, est désignée par le repère « D' ».

Cette installation consiste avantageusement en un automate, en particulier du type Automate Programmable Industriel.

Pour son fonctionnement, l'installation 1 comprend tout d'abord des moyens 2 pour le convoyage :

- de la denrée alimentaire primaire $\underline{D}$ (ou de la partie restant de denrée $\underline{D}$') et
- des tranches $\underline{T}$ générées dans cette denrée $\underline{D}$.

Les moyens de convoyage 2 consistent ici en un ensemble de bandes transporteuses motorisées qui comportent chacune un brin supérieur formant une surface de réception $\underline{S}$ pour le cheminement, dans un sens amont vers aval, - de la denrée $\underline{D}$, - de la partie restante de denrée $\underline{D}$' et - des tranches $\underline{T}$.

Les moyens de convoyage 2, décrits en détails par la suite, sont associés à une partie opérative pour assurer le tranchage contrôlé de la denrée $\underline{D}$.

Du côté amont, l'installation 1 comporte des moyens de pesée 3 de la denrée alimentaire primaire $\underline{D}$, avant son tranchage.

Ces moyens de pesée 3 consistent par exemple en un pont de pesée, avantageusement dynamique pour une mesure du poids au cours de son transport.

L'installation 1 comporte ensuite des moyens 4 pour la coupe en tranches de la denrée $\underline{D}$, chacune selon une épaisseur $\underline{E}$ propre (figure 3$\underline{C}$).

Pour cela, les moyens de coupe 4 en question comportent :

(i) plusieurs organes de tranchage 5, qui sont disposés en série par rapport aux moyens de convoyage 2 pour découper successivement chacune des tranches $\underline{T}$ dans la denrée $\underline{D}$ ou dans la partie restante de denrée $\underline{D}$', et
(ii) des moyens 6 pour ajuster la hauteur de chaque organe de tranchage 5 par rapport aux moyens de convoyage 2, afin de définir l'épaisseur $\underline{E}$ de chacune desdites tranches $\underline{T}$ générées (figure 3$\underline{B}$).

Chaque organe de tranchage 5 est agencé pour agir selon un plan de coupe $\underline{C}$ parallèle à la surface de réception $\underline{S}$, définissant entre eux l'épaisseur $\underline{E}$ de la tranche $\underline{T}$ coupée dans la denrée $\underline{D}$ (figure 3$\underline{B}$).

Par exemple, les organes de tranchage 5 consistent chacun en une lame ruban, cheminant horizontalement.

Les organes de tranchage 5 sont ici au nombre de trois, pour l'obtention d'au maximum quatre tranches $\underline{T}$ dans la denrée $\underline{D}$ apportée.

Bien entendu, le nombre d'organes de tranchage 5 peut être adapté au nombre maximum de tranches à générer dans la denrée ; de manière générale, l'installation 1 comporte de un à six organes de tranchage 5, pour générer respectivement de deux à sept tranches.

Dans ce cas, en fonction du nombre de tranches à couper, un ou plusieurs organes de tranchage 5 en aval peuvent être tout simplement escamotés, par exemple en augmentant suffisamment la distance séparant le plan de coupe $\underline{C}$ et la surface de réception $\underline{S}$.

Au niveau de chaque organe de tranchage 5, les moyens d'ajustement en hauteur 6 consistent ici en une platine de guidage 6$\underline{a}$ de la surface de réception $\underline{S}$, pilotée verticalement en translation par un servomoteur 6$\underline{b}$. Selon une variante de réalisation, ce réglage de la hauteur de coupe peut être obtenu par une manoeuvre verticale en translation de l'organe de tranchage 5.

Dans le cadre d'un morceau de dinde, les tranches ont par exemple avantageusement une épaisseur comprise entre 3 et 20 mm.

Chaque organe de tranchage 5 coopère également avec des moyens 7 pour comprimer verticalement la denrée $\underline{D}$, ou la partie restante de denrée $\underline{D}$', de manière à optimiser qualitativement le tranchage.

Ces moyens de compression 7 consistent ici en plusieurs contre-tapis 7$\underline{a}$, installés chacun au niveau de l'un des organes de tranchage 5 et en regard de la surface de réception $\underline{S}$ associée.

Ces contre-tapis 7$\underline{a}$ sont motorisés, de sorte à cheminer à une vitesse identique de la surface de réception $\underline{S}$ en regard.

L'extrémité aval de chaque contre-tapis 7$\underline{a}$ se situe au-dessus de l'organe de tranchage 5 associé ; et elle est associée à un vérin pneumatique 7$\underline{b}$ pour éviter un excès de pression appliquée sur la denrée $\underline{D}$ ou la partie restante de denrée $\underline{D}$'. Elle permet d'assurer un appui pendant la coupure et participe à l'évacuation de la partie restante de denrée $\underline{D}$'.

Le brin inférieur de ces contre-tapis 7$\underline{a}$, en regard de la surface de réception $\underline{S}$, vient appuyer sur la surface supérieure de la denrée $\underline{D}$ ou de la partie restant de denrée $\underline{D}$'.

Pour appliquer une pression optimale, chaque contre-tapis 7$\underline{a}$ est porté par des moyens 7$\underline{c}$ pour son réglage en hauteur par rapport à la surface de réception $\underline{S}$ en regard.

Ces moyens de réglage consistent par exemple en un chariot 7$\underline{c}$, manoeuvrable en translation verticale et portant le contre-tapis 7$\underline{a}$.

Cette manoeuvre est réalisable manuellement, par exemple au moyen d'une manivelle.

Elle peut encore être automatisée, sous le contrôle des moyens de commande décrits plus loin, pour tenir compte du poids et/ou de la surface d'appui et/ou de la hauteur du morceau $\underline{D}$ ou $\underline{D'}$ à trancher au niveau de chaque organe de tranchage 5.

Le pressage s'effectue avantageusement de sorte que la hauteur séparant l'extrémité aval du contre-tapis 7$\underline{a}$ et la surface de réception $\underline{S}$ soit inférieure à la hauteur réelle de la surface supérieure de la denrée primaire $\underline{D}$, ou le cas échéant de la partie restante de la denrée $\underline{D'}$, par rapport à ladite surface de réception $\underline{S}$.

Cette action de pressage vise en particulier à donner une forme homogène pour le morceau à trancher, de sorte à obtenir des tranches dont les formes sont les plus homogènes possibles ; elle vise également à aider les morceaux à progresser au niveau des moyens de coupe.

La hauteur de l'extrémité aval du contre-tapis 7$\underline{a}$ est ajustée au niveau de chacun des organes de tranchage 5 de l'installation 1.

Le coefficient de pression est avantageusement adapté notamment en fonction de la nature et de la masse volumique de la matière à trancher, sur la base d'un programme prédéfini.

Ce coefficient de pression peut également tenir compte du poids moyen des tranches obtenues par rapport à une consigne de poids, sous la forme d'une boucle de régulation intégrée aux moyens de commande décrits plus loin. Tenant compte de ce  retour, la pression appliquée est ajustée de manière à régler la masse volumique des morceaux à trancher vers une valeur recherchée.

Afin d'établir l'épaisseur $\underline{E}$ de chacune des tranches $\underline{T}$, l'installation 1 comporte ici des moyens 8 pour déterminer certaines au moins des dimensions $\underline{F}$ de la denrée primaire $\underline{D}$, ou le cas échéant de la partie restante de la denrée $\underline{D'}$.

En l'occurrence, les moyens de détermination dimensionnels 8 sont adaptés pour déterminer les dimensions surfaciques $\underline{Fs}$ de la face $\underline{A}$ de la denrée primaire $\underline{D}$, ou le cas échéant de la partie restante de la denrée $\underline{D'}$, qui est en appui sur la surface de réception $\underline{S}$.

Ces moyens de détermination dimensionnels 8 se composent de plusieurs organes capteur (désignés ci-après par le même repère 8), qui sont disposés chacun en amont de l'un des organes de tranchage 5.

A cet effet, ces organes capteur dimensionnels 8 consistent ici chacun en un dispositif de prise de vue numérique comportant un capteur photographique, par exemple du genre appareil photographique numérique ou caméra numérique.

Dans ce cas, par « dimensions surfaciques », on entend avantageusement le nombre de pixels constituant la face d'appui $\underline{A}$ dans l'image captée.

Pour cela, chaque organe capteur dimensionnel 8 est avantageusement installé de sorte à se situer à la verticale, ou au moins approximativement à la verticale, de la surface de réception $\underline{S}$ associée, pour l'obtention d'une prise de vue plongeante de la denrée $\underline{D}$ ou de la partie de denrée $\underline{D'}$ à trancher afin d'observer efficacement le contour de sa face d'appui $\underline{A}$.

Dans cette position, chaque organe capteur dimensionnels 8 va permettre d'évaluer efficacement la surface (ou aire) de la face d'appui $\underline{A}$ de la denrée $\underline{D}$ ou de la partie de denrée $\underline{D'}$.

Pour gérer le fonctionnement de cette installation 1, il est prévu des moyens de commande 10 destinés à piloter en particulier les moyens de convoyage 2 et les moyens de coupe 4.

Ces moyens de commande 10 consistent avantageusement en un ordinateur, apte notamment à déterminer le nombre $\underline{N}$ de tranches $\underline{T}$ à découper dans la denrée $\underline{D}$ et l'épaisseur $\underline{E}$ de chacune de ces tranches $\underline{T}$.

A cet effet, les moyens de commande 10 comportent des entrées pour l'acquisition des données générées par les moyens de pesée 3 et les différents moyens de détermination dimensionnels 8. Ils comportent également des sorties raccordées aux moyens de convoyage 2 et aux moyens de coupe 4 précités.

Les moyens de commande 10 comportent encore des moyens 11 pour le traitement des données de poids $\underline{P}$ et de dimensions $\underline{Fs}$ acquises.

A cet effet, ces moyens de traitement 11 comprennent une unité de calcul (ou processeur) mettant en oeuvre - un programme, avantageusement associé à une table de données (par exemple sous la forme d'une table de concordance) ou - un programme sous la forme d'une formule mathématique, permettant de définir les caractéristiques des tranches en fonction de ces données.

Plus précisément, les moyens de traitement 11 comportent ici des moyens pour déterminer, d'une part, le nombre $\underline{N}$ de tranches $\underline{T}$ à couper dans ladite denrée $\underline{D}$ et, d'autre part, la consigne de poids $\underline{Cp}$ pour chacune desdites tranches $\underline{T}$, cela en tenant compte du poids $\underline{P}$ mesuré pour la denrée $\underline{D}$ et d'une gamme de poids $\underline{Gp}$ prédéterminée pour chacune desdites tranches $\underline{T}$.

En pratique, ce nombre $\underline{N}$ de tranches $\underline{T}$ est ici ajusté de telle sorte que le poids $\underline{P}$ de ladite denrée $\underline{D}$ divisé par ledit nombre $\underline{N}$ de tranches $\underline{T}$ aboutit à une valeur de poids contenue dans ladite gamme de poids $\underline{Gp}$ recherchée.

Partant encore de ce poids $\underline{P}$ de la denrée $\underline{D}$, les moyens de traitement 11 comportent également des moyens pour établir une consigne de poids $\underline{Cp}$, pour chacune des tranches $\underline{T}$ à découper dans la denrée $\underline{D}$.

Dans ce cadre, la consigne de poids $\underline{Cp}$ pour chaque tranche $\underline{T}$ à obtenir, appartient avantageusement à la gamme de poids $\underline{Gp}$ souhaitée.

Selon le cas, il peut être prévu que les consignes de volume $\underline{Cv}$ ou les consignes de poids $\underline{Cp}$ soient identiques

pour l'ensemble des tranches, ou différentes les unes des autres.

Ces moyens de traitement 11 comportent encore des moyens pour déterminer l'épaisseur propre $E$ de chaque tranche $T$ à couper dans la denrée $D$ (ou la partie restante de denrée $D'$) tenant compte des dimensions $F$ déterminées par les moyens de détermination dimensionnels 8 et des consignes de poids $Cp$.

Dans ce cadre, l'épaisseur $E$ d'une tranche $T$ peut être obtenue sur la base d'une consigne indirecte de volume $Cv$ découlant de la consigne de poids $Cp$ et d'une valeur de masse volumique $Mv$ de la tranche $T$ (ou de la denrée $D$ ou de la partie restante de denrée $D'$).

En particulier, l'épaisseur $E$ de chaque tranche $T$ est adaptée de sorte que le volume de cette dernière lui confère un poids $U$ correspond, au moins approximativement, à la consigne de poids $Cp$ recherchée.

De manière générale, les moyens de traitement 11 sont avantageusement programmés à façon, en fonction des besoins de l'utilisateur.

Par exemple, pour la découpe de filets de dinde en tranches, la gamme de poids $Gp$ attendue peut être comprise entre 100 et 140 grammes ; et les morceaux à trancher $D$ peuvent avoir un poids avantageusement compris entre 300 et 779 grammes.

Une table de données est établie conformément aux attentes de l'utilisateur, avec une mise en concordance du poids $P$, au gramme près, de la denrée à trancher $D$ avec, d'une part, le nombre $N$ de tranches $T$ à découper et, d'autre part, les poids $U$ respectifs de ces dernières (au gramme près).

Partant de ces consignes de poids $Cp$, les moyens de traitement 11 déterminent l'épaisseur $E$ des tranches $T$ successives à couper dans la denrée $D$.

Pour cela, ces moyens de traitement 11 comportent également des moyens pour calculer la surface $Fs$ de la face d'appui $A$ de la denrée $D$, ou de la partie de denrée $D'$, à partir des données acquises par chacun des organes capteur dimensionnels 8.

Lorsque la masse volumique $Mv$ de la denrée $D$ est connue, il est possible de convertir la consigne de poids $Cp$ en une consigne de volume $Cv$, puis de déterminer l'épaisseur $E$ de la tranche $T$ correspondante.

Des formules pouvant être utilisées pour déterminer l'épaisseur $E$ de chaque tranche $T$ sont par exemple les suivantes :

$$Cv = Cp \ x \ Mv$$

et

$$E = Cv \ / \ Fs$$

Soit

$$E = Cp \ / \ (Mv \ x \ Fs)$$

dans laquelle

E correspond à l'épaisseur à obtenir pour la tranche d'intérêt,
Cp correspond à la consigne de poids pour la tranche d'intérêt,
Cv correspond à la consigne de volume pour la tranche d'intérêt,
Mv est une valeur prédéterminée de masse volumique pour la denrée, et
Fs représente la valeur de surface de la face d'appui $A$ de la denrée $D$.

Selon une variante de réalisation, la table de données peut encore définir des consignes de volume $Cv$ pour les tranches $T$ respectives, en correspondance du poids $P$ de la denrée $D$.

Dans ce cas, une formule pouvant être utilisée pour déterminer l'épaisseur $E$ de chaque tranche $T$ serait la suivante :

$$E = Cv / Fs$$

dans laquelle

E correspond à l'épaisseur à obtenir pour la tranche d'intérêt,
Cv correspond à la consigne de volume pour la tranche d'intérêt, et
Fs représente la valeur de surface de la face d'appui A de la denrée D.

Selon encore une variante, l'épaisseur E de chaque tranche T peut encore être déterminée par la formule suivante :

$$E = \frac{P \times \text{Facteur échelle de l'image}}{\text{Nombre de pixels}}$$

dans laquelle :

- le « nombre de pixels » correspond au nombre de pixels défini par le morceau D ou D' à trancher dans l'image captée par l'organe de capture 8 ;
- le « facteur échelle de l'image » correspond à la taille en pixels de l'image ; et
- « P » correspond au poids mesuré lors du pesage initial.

Ainsi, les moyens de traitement 11 tiennent compte d'une consigne de volume Cv, indirectement, pour déterminer l'épaisseur E de chaque tranche T.

L'installation 1 comprend également des moyens pour l'individualisation des tranches générées, qui sont constitués ici par les moyens de convoyage 2.

A cet effet, les moyens de convoyage 2 comprennent un ensemble de convoyeurs convenablement agencés les uns par rapport aux autres, à savoir :

(i) plusieurs convoyeurs primaires 2a, agencés en série et s'étendant chacun sous l'un des organes de tranchage 5, pour le convoyage, d'une part, de la denrée D ou d'une partie restante de denrée D', en amont dudit organe de tranchage associé 5 et, d'autre part, de la tranche T générée, en aval dudit organe de tranchage 5,
(ii) un convoyeur collecteur 2b, situé en aval desdits convoyeurs primaires 2a et recevant chacune des tranches T générées par les organes de tranchage 5 pour leur transport jusqu'à une installation de conditionnement,
(iii) des convoyeurs secondaires 2c, implantés chacun entre l'extrémité aval d'un convoyeur primaire 2a et le convoyeur collecteur 2b, dont la vitesse de cheminement est pilotée par les moyens de commande 10 notamment pour contrôler la répartition des tranches T sur le convoyeur collecteur 2b,
(iv) des convoyeurs tertiaires 2d, implantés chacun entre l'un des organes de tranchage 5 et l'extrémité amont du convoyeur primaire 2a suivant, pour réceptionner la partie restante de denrée D' et pour assurer sa dépose sur le convoyeur primaire 2a suivant.

Pour une séparation optimale en aval de chaque organe de tranchage 5, un bec de séparation 2e est avantageusement intercalé entre ledit organe de tranchage 5 et l'extrémité amont du convoyeur tertiaire 2d qui lui est associé.

Ces différents convoyeurs 2 comportent chacun un brin supérieur, constituant une partie de la surface de réception S précitée.

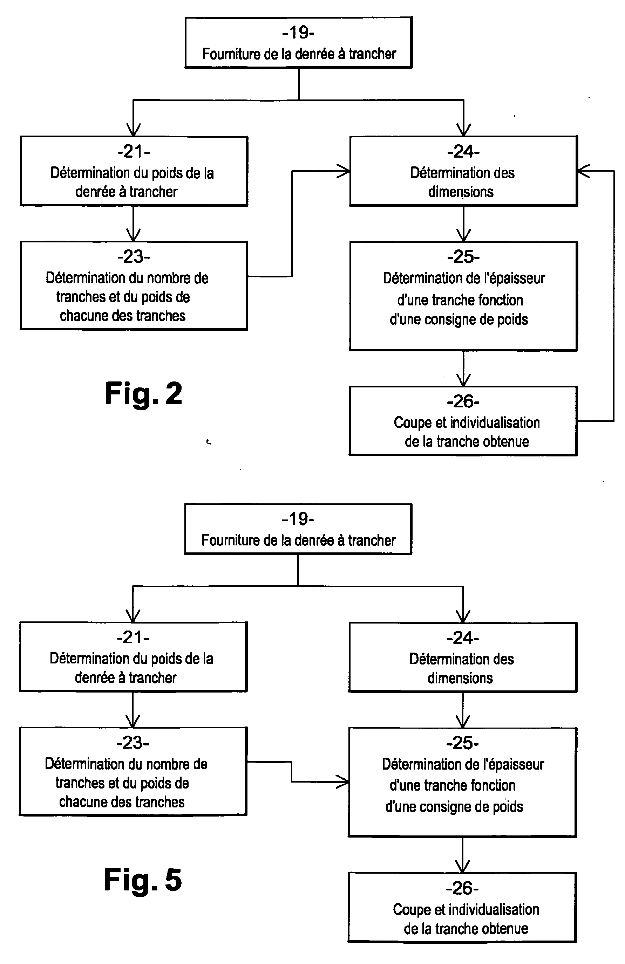

Le fonctionnement de l'installation 1 selon la figure 1 est décrit plus en détail ci-dessous en relation avec les figures 2 et 3A à 3C.

Tout d'abord, la denrée à trancher D est rapportée au niveau des moyens de pesée 3 de l'installation 1 (repère 19 sur la figure 2), pour mettre en oeuvre une opération 21 de pesée de la denrée alimentaire à trancher D (figure 2 et 3A).

Cette opération de dépose 19 peut être réalisée manuellement, ou par le biais de moyens mécaniques adaptés (par exemple un convoyeur d'alimentation).

Partant de ce poids P mesuré et avantageusement au moyen de la table de concordance préalablement établie, une opération 23 de traitement des données est mise en oeuvre par les moyens de traitement 11 précités.

L'opération de traitement 23 permet une détermination (i) du nombre N de tranches T à générer dans la denrée

alimentaire $\underline{D}$ et (ii) des consignes respectives de poids $\underline{Cp}$ pour chacune des tranches $\underline{T}$ à couper dans ladite denrée $\underline{D}$.

Parallèlement à cette pesée, la denrée $\underline{D}$ est également analysée par l'un des organes de détection 8, selon une opération 24 pour la détermination des dimensions surfaciques $\underline{Fs}$ de sa face d'appui $\underline{A1}$ reposant sur la surface de réception $\underline{S}$ du moyen de pesée 3 (figures 2 et 3$\underline{A}$).

Tenant compte de cette donnée dimensionnelle, les moyens de traitement 11 exécutent une opération 25 pour déterminer la surface de cette face d'appui $\underline{A1}$ puis, sur cette base, pour déterminer l'épaisseur $\underline{E}$ de la tranche $\underline{T}$ à couper dans la denrée $\underline{D}$ de sorte que le poids $\underline{U}$ de cette tranche $\underline{T}$ obtenue soit égal à la consigne de poids $\underline{Cp}$ précitée (figure 2).

Partant de cette valeur d'épaisseur $\underline{E}$, les moyens de commande 11 pilotent les moyens d'ajustement en hauteur 6 de manière à obtenir une distance adaptée entre l'organe de tranchage 5 et la surface de réception $\underline{S}$ (figure 3$\underline{A}$).

Une fois les moyens de coupe 4 convenablement réglés, l'étape de coupe et d'individualisation 26 est mise en oeuvre, au cours de laquelle la denrée $\underline{D}$ est tranchée selon un plan de coupe parallèle à la surface de réception $\underline{S}$ pour définir entre eux l'épaisseur de ladite tranche $\underline{T}$ (figures 2 et 3$\underline{B}$).

Pour cela, le convoyeur primaire 2$\underline{a}$ entraine la denrée $\underline{D}$ vers l'organe de tranchage 5, cette denrée étant comprimée par le contre-tapis 7$\underline{a}$ en regard. Pour une coupe optimale, ce contre-tapis 7$\underline{a}$ est avantageusement convenablement ajusté en hauteur, par exemple avec un pilotage automatique par les moyens de commande 11.

Lors de ce tranchage, il est ainsi généré deux morceaux tels qu'illustrés sur la figure 3$\underline{C}$ :

- d'une part, la tranche $\underline{T}$ qui chemine sous l'organe de tranchage 5 et qui poursuit son cheminement sur le même convoyeur primaire 2$\underline{a}$, et
- d'autre part, la partie restant de denrée $\underline{D}$' qui est récupérée par le convoyer tertiaire 2$\underline{d}$ qui se situe juste en aval de l'organe de tranchage 5.

La tranche $\underline{T}$ individualisée est conduite jusqu'au convoyeur collecteur 2$\underline{b}$.

La partie restante de denrée $\underline{D}$' est quant à elle analysée par l'organe capteur dimensionnels 8 associé à ce convoyeur tertiaire 2$\underline{d}$, pour assurer une nouvelle opération 24 de détermination des dimensions surfaciques $\underline{Fs}$ de sa nouvelle face $\underline{A2}$ en appui sur la surface de réception $\underline{S}$ de ce convoyeur tertiaire 2$\underline{d}$ (la nouvelle face $\underline{A2}$ correspond à la face générée par la coupe planaire de la denrée $\underline{D}$).

Les moyens de traitement 11 assurent alors une nouvelle opération 25 pour déterminer la surface de cette nouvelle face d'appui $\underline{A2}$ puis, sur cette base, pour déterminer l'épaisseur $\underline{E}$ de la deuxième tranche $\underline{T}$ à couper dans la partie restante de denrée $\underline{D}$' de sorte que le poids $\underline{U}$ de ladite tranche $\underline{T}$ obtenue soit égal à la consigne de poids $\underline{Cp}$ précitée (figure 2).

La partie restante $\underline{D}$' de la denrée $\underline{D}$ est ainsi déposée sur le deuxième convoyeur primaire 2$\underline{a}$ pour subir de nouvelles étapes 26 de tranchage et d'individualisation similaires à celles décrites ci-dessus en relation avec les figures 2 et 3$\underline{A}$ à 3$\underline{C}$.

Ces différentes étapes de détermination de dimensions 24, de traitement 25, et de tranchage/individualisation 26 sont reproduites pour le tranchage de chacune des tranches $\underline{T}$ à découper dans la denrée $\underline{D}$.

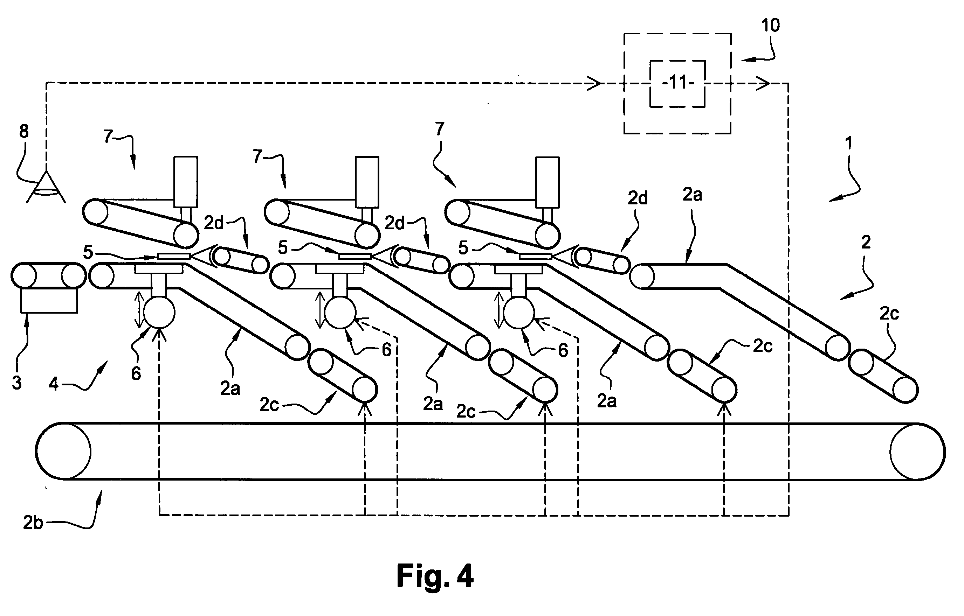

Une variante de réalisation de l'installation 1 est représentée sur la figure 4.

Cette installation 1 est similaire à celle décrite ci-dessus en relation avec les figures 1 à 3.

Elle se distingue par la structure des moyens de détermination de dimensions 8 qui consistent ici en des moyens de détermination disposés en amont des moyens de coupe 4.

Ces moyens de détermination de dimensions 8 consistent en des moyens pour la détermination des dimensions volumiques $\underline{Fv}$ de la denrée alimentaire $\underline{D}$ avant son tranchage.

Par exemple, ces moyens de détermination de dimensions 8 consistent en - un dispositif de capture d'image, associé à une barrière lumineuse pour la hauteur, ou - un système laser pour analyse de volume.

Dans ce cas, les moyens de traitement 11 équipant les moyens de commande 10 mettent en oeuvre un procédé tel que défini par l'organigramme de la figure 5, à savoir :

(a) une étape 21, 24 d'analyse de ladite denrée $\underline{D}$ à trancher, comprenant une opération 21 de détermination du poids et une opération 24 de détermination des dimensions volumiques de ladite denrée $\underline{D}$ à trancher,

(b) une étape de traitement de données comprenant - une opération de traitement 23 pour déterminer le nombre $\underline{N}$ de tranches $\underline{T}$ et les consignes de poids $\underline{Cp}$ pour chacune desdites tranches $\underline{T}$, et - une opération de traitement 25 pour déterminer l'épaisseur $\underline{E}$ de chacune des tranches $\underline{T}$ à couper dans ladite denrée $\underline{D}$, tenant compte desdites dimensions déterminées lors de ladite étape d'analyse (a) et desdites consignes de poids $\underline{Cp}$,

(c/d) des étapes 26 successives de coupe et d'individualisation des tranches $\underline{T}$ dans ladite denrée $\underline{D}$, pour individualiser chacune des tranches $\underline{T}$ avec une épaisseur $\underline{E}$ déterminée à l'issue de l'étape de traitement (b) précédente.

De manière générale, l'installation 1 selon l'invention est particulièrement efficace et rapide ; en fonction des matériels utilisés, elle est apte à traiter des morceaux de poids différents, en série, comportant chacun un poids compris entre 200 et 800 g, pour générer jusqu'à 12000 tranches individualisées par heure.

**Revendications**

1. Procédé pour la coupe en tranches d'une denrée alimentaire, par exemple un morceau de viande, et pour l'individualisation des tranches obtenues, lequel procédé comprend les étapes (a) à (d) suivantes :

   (a) au moins une étape (21, 24) d'analyse de ladite denrée ($\underline{D}$) à trancher en appui sur une surface de réception ($\underline{S}$), comprenant - une opération (24) de détermination des dimensions ($\underline{F}$) d'au moins une partie de ladite denrée ($\underline{D}$) à trancher, et - une opération de pesée (21) de ladite denrée ($\underline{D}$) à trancher pour déterminer son poids ($\underline{P}$),
   (b) au moins une étape de traitement de données (23, 25) pour déterminer l'épaisseur ($\underline{E}$) des tranches ($\underline{T}$) à couper dans ladite denrée alimentaire ($\underline{D}$), tenant compte des dimensions ($\underline{F}$) déterminées lors de ladite étape d'analyse (21, 24) ainsi que d'une consigne de poids ($\underline{Cp}$) pour chacune desdites tranches ($\underline{T}$),
   (c) au moins une étape de coupe (26) de chacune des tranches ($\underline{T}$) dans ladite denrée alimentaire ($\underline{D}$), selon un plan de coupe parallèle à ladite surface de réception ($\underline{S}$), pour obtenir chacune desdites tranches ($\underline{T}$) avec une épaisseur ($\underline{E}$) déterminée à l'issue de ladite étape de traitement (23, 25), et
   (d) au moins une étape d'individualisation (26) desdites tranches ($\underline{T}$) obtenues à l'issue de ladite étape de coupe (26),

   **caractérisé en ce que** ladite étape de traitement de données (23, 25) comprend encore, tenant compte du poids ($\underline{P}$) de ladite denrée alimentaire ($\underline{D}$) issu de ladite opération de pesée (21) et d'une gamme de poids ($\underline{Gp}$) prédéterminée pour chacune desdites tranches ($\underline{T}$), une opération (23) de détermination :

   - du nombre ($\underline{N}$) de tranches ($\underline{T}$) à couper dans ladite denrée alimentaire ($\underline{D}$), et
   - de ladite consigne de poids ($\underline{Cp}$) pour chacune desdites tranches ($\underline{T}$), chaque consigne de poids ($\underline{Cp}$) étant comprise dans ladite gamme de poids ($\underline{Gp}$) prédéterminée.

2. Procédé selon la revendication 1, **caractérisé en ce que** l'étape de traitement de données (23, 25) pour déterminer l'épaisseur ($\underline{E}$) d'au moins une tranche ($\underline{T}$) à couper dans la denrée alimentaire ($\underline{D}$) tient compte d'une consigne de volume ($\underline{Cv}$) découlant de la masse volumique ($\underline{Mv}$) de ladite denrée ($\underline{D}$) à trancher et d'une consigne de poids ($\underline{Cp}$) pour ladite tranche ($\underline{T}$).

3. Procédé selon l'une quelconque des revendications 1 ou 2, **caractérisé en ce qu'**il comprend une unique étape d'analyse (21, 24) suivie d'une unique étape de traitement de données (23, 25), au cours desquelles est déterminé l'épaisseur ($\underline{E}$) de chacune des tranches ($\underline{T}$) à couper dans ladite denrée alimentaire ($\underline{D}$), lesquelles étapes d'analyse (21, 24) et de traitement de données (23, 25) sont mises en oeuvre préalablement à une ou plusieurs étapes de coupe et d'individualisation (26).

4. Procédé selon l'une quelconque des revendications 1 ou 2, **caractérisé en ce que** la succession des étapes d'analyse (21, 24), de traitement de données (23, 25), de coupe et d'individualisation (26), est reproduite pour la coupe de chaque tranche ($\underline{T}$) d'épaisseur ($\underline{E}$) déterminée dans ladite denrée alimentaire ($\underline{D}$), ou dans la partie restante ($\underline{D'}$) de ladite denrée alimentaire ($\underline{D}$) après tranchage.

5. Procédé selon la revendication 4, **caractérisé en ce que** l'étape d'analyse (21, 24) comprend une opération de détermination des dimensions ($\underline{F}$) de la face d'appui ($\underline{A}$) de la denrée alimentaire ($\underline{D}$) à trancher, ou de ladite partie restante ($\underline{D'}$) de ladite denrée alimentaire ($\underline{D}$) après tranchage, qui est en appui sur la surface de réception ($\underline{S}$), et **en ce que** chaque étape de coupe (26) consiste à trancher ladite denrée alimentaire ($\underline{D}$), ou ladite partie restante ($\underline{D'}$) de ladite denrée alimentaire ($\underline{D}$), selon un plan de coupe parallèle à ladite surface de réception ($\underline{S}$) pour définir entre eux l'épaisseur ($\underline{E}$) de ladite tranche ($\underline{T}$).

6. Procédé selon l'une quelconque des revendications 1 à 5, **caractérisé en ce que**, au cours de la ou des étapes coupe (26), la denrée alimentaire ($\underline{D}$) est dans un état comprimé.

7. Installation pour la coupe en tranches d'une denrée alimentaire, et pour l'individualisation des tranches obtenues, laquelle installation comprend des moyens (2) pour le convoyage de ladite denrée alimentaire ($\underline{D}$) et desdites

tranches ($\underline{T}$) issues de ladite denrée alimentaire (D), sur une surface de réception ($\underline{S}$), lesquels moyens de convoyage (2) coopèrent avec :

(a) des moyens (8) de détermination des dimensions ($\underline{F}$) d'au moins une partie de ladite denrée alimentaire ($\underline{D}$) à trancher,
(b) des moyens de pesée (3) de ladite denrée alimentaire ($\underline{D}$) à trancher, disposés en amont de moyens de coupe (4),
(c) des moyens de coupe (4) de ladite denrée alimentaire ($\underline{D}$) en tranches ($\underline{T}$), selon un plan de coupe parallèle à ladite surface de réception ($\underline{S}$), avec chacune une épaisseur ($\underline{E}$) déterminée,
(d) des moyens d'individualisation desdites tranches ($\underline{T}$) obtenues, et
(e) des moyens de commande (10) pour le pilotage de ladite installation (1), comportant des moyens de traitement de données (11) pour déterminer l'épaisseur ($\underline{E}$) de chacune des tranches ($\underline{T}$) à couper dans ladite denrée alimentaire ($\underline{D}$), tenant compte desdites dimensions ($\underline{F}$) déterminées par lesdits moyens de détermination de dimensions (8) et d'une consigne de poids ($\underline{Cp}$) déterminée pour chacune desdits tranches ($\underline{T}$),

**caractérisée en ce que** lesdits moyens de traitement de données (11) comportent des moyens pour déterminer, tenant compte du poids ($\underline{P}$) de ladite denrée alimentaire ($\underline{D}$) et d'une gamme de poids ($\underline{Gp}$) prédéterminée pour chacune desdites tranches ($\underline{T}$) :

- le nombre ($\underline{N}$) de tranches ($\underline{T}$) à couper dans ladite denrée alimentaire ($\underline{D}$), et
- ladite consigne de poids ($\underline{Cp}$) pour chacune desdites tranches ($\underline{T}$), chaque consigne de poids ($\underline{Cp}$) étant comprise dans ladite gamme de poids ($\underline{Gp}$) prédéterminée.

8. Installation selon la revendication 7, **caractérisée en ce que** les moyens de commande (10) comportent des moyens de traitement de données (11) pour déterminer l'épaisseur ($\underline{E}$) de chacune des tranches ($\underline{T}$) à couper dans ladite denrée alimentaire ($\underline{D}$) tenant compte d'une consigne de volume (Cv) découlant de la masse volumique ($\underline{Mv}$) de ladite denrée ($\underline{D}$) à trancher et d'une consigne de poids ($\underline{Cp}$) pour ladite tranche ($\underline{T}$).

9. Installation selon l'une quelconque des revendications 7 ou 8, **caractérisée en ce que** lesdits moyens de coupe (4) comportent (i) plusieurs organes de tranchage (5) et (ii) des moyens (6) pour ajuster la hauteur de chacun desdits organes de tranchage (5) par rapport aux moyens de convoyage (2) afin de définir l'épaisseur ($\underline{E}$) de chacune des tranches ($\underline{T}$).

10. Installation selon la revendication 9, **caractérisée en ce que** les organes de tranchage (5) sont disposés en série par rapport aux moyens de convoyage (2).

11. Installation selon la revendication 10, **caractérisée en ce que** lesdits moyens de détermination de dimensions (8) consistent en des organes capteur (8) qui sont disposés chacun en amont de l'un des organes de tranchage (5) et qui permettent la détermination des dimensions surfaciques ($\underline{Fs}$) de la face d'appui de ladite denrée alimentaire ($\underline{D}$), ou de la partie restant ($\underline{D'}$) de ladite denrée alimentaire ($\underline{D}$), qui est en appui sur la surface de réception ($\underline{S}$) constitutive des moyens de convoyage (2), et **en ce que** chaque organe de tranchage (5) assure un plan de coupe parallèle à ladite surface de réception ($\underline{S}$) pour définir entre eux l'épaisseur ($\underline{E}$) de ladite tranche ($\underline{T}$).

12. Installation selon la revendication 11, **caractérisée en ce que** les moyens de détermination de dimensions (8) consistent en des moyens pour la détermination des dimensions volumiques ($\underline{Fv}$) de ladite denrée alimentaire ($\underline{D}$) à trancher, qui sont disposés en amont des moyens de coupe (4).

13. Installation selon l'une quelconque des revendications 7 à 12, **caractérisée en ce qu'**elle comporte des moyens (7) pour comprimer verticalement ladite denrée alimentaire ($\underline{D}$) au niveau des moyens de coupe (4).

**Patentansprüche**

1. Verfahren zum Schneiden eines Nahrungsmittels, beispielsweise eines Stücks Fleisch, in Scheiben und zum Trennen der erhaltenen Scheiben, wobei das Verfahren die folgenden Schritte (a) bis (d) umfasst:

(a) mindestens einen Schritt (21, 24) der Analyse des zu schneidenden Nahrungsmittels (D), das auf einer Aufnahmefläche (S) aufliegt, umfassend - einen Vorgang (24) der Bestimmung der Abmessungen (F) mindestens eines Teils des zu schneidenden Nahrungsmittels (D), und - einen Vorgang des Abwiegens (21) des zu schneidenden Nahrungsmittels (D), um sein Gewicht (P) zu bestimmen,

(b) mindestens einen Schritt der Datenverarbeitung (23, 25), um die Dicke (E) der aus dem Nahrungsmittel (D) zu schneidenden Scheiben (T) zu bestimmen, unter Berücksichtigung der Abmessungen (F), die in dem Analyseschritt (21, 24) bestimmt wurden, sowie eines Gewichtssollwertes (Cp) für jede der Scheiben (T),

(c) mindestens einen Schritt des Schneidens (26) jeder der Scheiben (T) aus einem Nahrungsmittel (D) entlang einer Schnittebene parallel zur Aufnahmefläche (S), um jede der Scheiben (T) mit einer nach dem Verarbeitungsschritt (23, 25) bestimmten Dicke (E) zu erhalten,

(d) mindestens einen Schritt der Trennung (26) der Scheiben (T), die nach dem Schritt des Schneidens (26) erhalten wurden,

**dadurch gekennzeichnet, dass** der Datenverarbeitungsschritt (23, 25) ferner unter Berücksichtigung des Gewichts (P) des Nahrungsmittels (D) nach dem Schritt des Abwiegens (21) und einer Gewichtsskala (Gp), die für jede der Scheiben (T) vorbestimmt ist, einen Schritt (23) umfasst, um zu bestimmen:

- die Anzahl (N) von aus dem Nahrungsmittel (D) zu schneidenden Scheiben (T), und
- den Gewichtssollwert (Cp) für jede der Scheiben (T), wobei jeder Gewichtssollwert (Cp) in der vorbestimmten Gewichtsskala (Gp) enthalten ist.

2. Verfahren nach Anspruch 1, **dadurch gekennzeichnet, dass** der Datenverarbeitungsschritt (23, 25) zur Bestimmung der Dicke (E) mindestens einer aus dem Nahrungsmittel (D) zu schneidenden Scheibe (T) einen Volumensollwert (Cv) berücksichtigt, der sich aus der volumenbezogenen Masse (Mv) des zu schneidenden Nahrungsmittels (D) und einem Gewichtssollwert (Cp) für die Scheibe (T) ergibt.

3. Verfahren nach einem der Ansprüche 1 oder 2, **dadurch gekennzeichnet, dass** es einen einzigen Analyseschritt (21, 24), gefolgt von einem einzigen Datenverarbeitungsschritt (23, 25) umfasst, während derer die Dicke (E) jeder der aus dem Nahrungsmittel (D) zu schneidenden Scheiben (T) bestimmt wird, wobei die Analyse- (21, 24) und Datenverarbeitungsschritte (23, 25) vor einem oder mehreren Schritten des Schneidens und der Trennung (26) eingesetzt werden.

4. Verfahren nach einem der Ansprüche 1 oder 2, **dadurch gekennzeichnet, dass** die Aufeinanderfolge der Schritte der Analyse (21, 24), der Datenverarbeitung (23, 25), des Schneidens und der Trennung (26) für das Schneiden jeder Scheibe (T) mit der bestimmten Dicke (E) aus dem Nahrungsmittel (D) oder aus dem übrigen Teil (D') des Nahrungsmittels (D) nach dem Schneiden wiederholt wird.

5. Verfahren nach Anspruch 4, **dadurch gekennzeichnet, dass** der Analyseschritt (21, 24) einen Vorgang der Bestimmung der Abmessungen (F) der Stützfläche (A) des zu schneidenden Nahrungsmittels (D) oder des übrigen Teils (D') des Nahrungsmittels (D) nach dem Schneiden, das auf der Aufnahmefläche (S) aufliegt, umfasst, und dass jeder Schritt des Schneidens (26) darin besteht, das Nahrungsmittel (D) oder den übrigen Teil [D'] des Nahrungsmittels (D) entlang einer Schnittebene parallel zur Aufnahmefläche (S) zu schneiden, um zwischen ihnen die Dicke (E) der Scheibe (T) zu definieren.

6. Verfahren nach einem der Ansprüche 1 bis 5, **dadurch gekennzeichnet, dass** während des oder der Schritte des Schneidens (26) das Nahrungsmittel (D) in einem komprimierten Zustand ist.

7. Anlage zum Schneiden eines Nahrungsmittels in Scheiben und zur Trennung der erhaltenen Scheiben, wobei die Anlage Mittel (2) zum Befördern des Nahrungsmittels (D) und der aus dem Nahrungsmittel (D) hervorgegangenen Scheiben (T) auf eine Aufnahmefläche (S), wobei die Fördermittel (2) zusammenwirken mit:

(a) Mitteln (8) zur Bestimmung der Abmessungen (F) mindestens eines Teils des zu schneidenden Nahrungsmittels (D),
(b) Mitteln zum Abwiegen (3) des zu schneidenden Nahrungsmittels (D), die stromaufwärts zu Schneidemitteln (4) angeordnet sind,
(c) Mitteln zum Schneiden (4) des Nahrungsmittels (D) in Scheiben (T) entlang einer Schnittebene parallel zur Aufnahmefläche (S), jeweils mit einer bestimmten Dicke (E),
(d) Mitteln zur Trennung der erhaltenen Scheiben (T), und
(e) Steuermitteln (10) zur Steuerung der Anlage (1), umfassend Datenverarbeitungsmittel (11), um die Dicke (E) jeder der aus dem Nahrungsmittel (D) zu schneidenden Scheiben (T) unter Berücksichtigung der Abmessungen (F), die von den Mitteln (8) zur Bestimmung der Abmessungen bestimmt wurden, und eines Gewichtssollwertes (Cp), der für jede der Scheiben (T) bestimmt wurde, zu bestimmen,

**dadurch gekennzeichnet, dass** die Datenverarbeitungsmittel (11) Mittel umfassen, um unter Berücksichtigung des Gewichts (P) des Nahrungsmittels (D) und einer vorbestimmten Gewichtsskala (Gp) für jede der Scheiben (T) zu bestimmen:

- die Anzahl (N) von aus dem Nahrungsmittel (D) zu schneidenden Scheiben (T), und
- den Gewichtssollwert (Cp) für jede der Scheiben (T), wobei jeder Gewichtssollwert (Cp) in der vorbestimmten Gewichtsskala (Gp) liegt.

8.  Anlage nach Anspruch 7, **dadurch gekennzeichnet, dass** die Steuermittel (10) Datenverarbeitungsmittel (11) umfassen, um die Dicke (E) jeder der aus dem Nahrungsmittel (D) zu schneidenden Scheiben (T) unter Berücksichtigung eines Volumensollwerts (Cv), der aus der volumenbezogenen Masse (Mv) des zu schneidenden Nahrungsmittels (D) hervorgeht, und eines Gewichtssollwerts (Cp) für die Scheibe (T) zu bestimmen.

9.  Anlage nach einem der Ansprüche 7 oder 8, **dadurch gekennzeichnet, dass** die Schneidemittel (4) (i) mehrere Schneidelemente (5) und (ii) Mittel (6) zur Anpassung der Höhe jedes der Schneidelemente (5) in Bezug zu den Fördermitteln (2) umfassen, um die Dicke (E) jeder der Scheiben (T) zu definieren.

10. Anlage nach Anspruch 9, **dadurch gekennzeichnet, dass** die Schneidelemente (5) in Serie zu den Fördermitteln (2) angeordnet sind.

11. Anlage nach Anspruch 10, **dadurch gekennzeichnet, dass** die Mittel (8) zur Bestimmung der Abmessungen in Sensoren (8) bestehen, die jeweils stromaufwärts zu einem der Schneidelemente (5) angeordnet sind und die die Bestimmung der Oberflächenabmessungen (Fs) der Auflagefläche des Nahrungsmittels (D) oder des übrigen Teils (D') des Nahrungsmittels (D) ermöglichen, das auf der Aufnahmefläche (S) aufliegt, die Bestandteil der Fördermittel (2) ist, und dass jedes Schneidelement (5) eine Schnittebene parallel zur Aufnahmefläche (S) gewährleistet, um zwischen sich die Dicke (E) der Scheibe (T) zu definieren.

12. Anlage nach Anspruch 11, **dadurch gekennzeichnet, dass** die Mittel zur Bestimmung der Abmessungen (8) in Mitteln zur Bestimmung der volumenbezogenen Abmessungen (Fv) des zu schneidenden Nahrungsmittels (D) bestehen, die stromaufwärts zu den Schneidemitteln (4) angeordnet sind.

13. Anlage nach einem der Ansprüche 7 bis 12, **dadurch gekennzeichnet, dass** sie Mittel (7) umfasst, um das Nahrungsmittel (D) vertikal auf Höhe der Schneidemittel (4) zu komprimieren.

**Claims**

1.  A method for slicing a foodstuff, for example a piece of meat, and for individualising the slices obtained, wherein the method comprises the following steps (a)-(d):

(a) at least one step (21, 24) of analysing said foodstuff (D) to be sliced, in rest on a receiving surface (S), comprising - an operation (24) of determining the size (F) of at least one portion of said foodstuff (D) to be sliced, and - an operation (21) of weighting said foodstuff (D) to be sliced to determine its weight (P),
(b) at least one step (23, 25) of data processing to determine the thickness (E) of the slices (T) to be cut out from said foodstuff (D), taking into account the size (F) determined during said step of analysis (21, 24) as well as a weight set-value (Cp) for each of said slices (T),
(c) at least one step (26) of cutting each of the slices (T) out from said foodstuff (D), along a cutting plane parallel to said receiving surface (S), to obtain each of said slices (T) with a thickness (E) determined at said step of processing (23, 25), and
(d) at least one step (26) of individualising said slices (T) obtained at said step of cutting (26),

**characterized in that** said step of data processing (23, 25) still comprises, taking into account the weight (P) of said foodstuff (D) obtained at said weighting operation (21) and a predetermined weight range (Gp) for each of said slices (T), an operation (23) of determining:

- the number ($\underline{N}$) of slices ($\underline{T}$) to be cut out from said foodstuff ($\underline{D}$), and
- said weight set-value ($\underline{Cp}$) for each of said slices ($\underline{T}$), each weight set-value ($\underline{Cp}$) being comprised in said predetermined weight range ($\underline{Gp}$).

2. The method according to claim 1, **characterized in that** the step (23, 25) of data processing to determine the thickness ($\underline{E}$) of at least one slice ($\underline{T}$) to be cut out from said foodstuff ($\underline{D}$) takes into account a volume set-value ($\underline{Cv}$) derived from the density ($\underline{Mv}$) of said foodstuff ($\underline{D}$) to be sliced and a weight set-value ($\underline{Cp}$) for said slice ($\underline{T}$).

3. The method according to any one of claims 1 or 2, **characterized in that** it comprises a single step of analysis (21, 24) followed with a single step of data processing (23, 25), during which the thickness ($\underline{E}$) of each of the slices ($\underline{T}$) to be cut out from said foodstuff ($\underline{D}$) is determined, wherein said steps of analysis (21, 24) and of data processing (23, 25) are implemented before one or several steps of cutting and individualization (26).

4. The method according to any one of claims 1 or 2, **characterized in that** the succession of the steps of analysis (21, 24), data processing (23, 25), cutting and individualization (26) is repeated for the cutting of each slice ($\underline{T}$) of determined thickness ($\underline{E}$) out from said foodstuff ($\underline{D}$), or from the remaining portion ($\underline{D'}$) of said foodstuff ($\underline{D}$) after slicing.

5. The method according to claim 4, **characterized in that** the step of analysis (21, 24) comprises a operation of determining the size ($\underline{F}$) of the bearing face ($\underline{A}$) of the foodstuff ($\underline{D}$) to be sliced, or of said remaining portion ($\underline{D'}$) of said foodstuff ($\underline{D}$) after slicing, which is in rest on the receiving surface ($\underline{S}$), and **in that** each cutting step (26) consists in slicing said foodstuff ($\underline{D}$), or said remaining portion ($\underline{D'}$) of said foodstuff ($\underline{D}$), along a cutting plane parallel to said receiving surface ($\underline{S}$) to define between them the thickness ($\underline{E}$) of said slice ($\underline{T}$).

6. The method according to any one of claims 1 to 5, **characterized in that**, during the cutting step(s) (26), the foodstuff ($\underline{D}$) is in a compressed state.

7. An installation for slicing a foodstuff, and for individualising the slices obtained, wherein the installation comprises means (2) for transporting said foodstuff ($\underline{D}$) and said slices ($\underline{T}$) cut out from said foodstuff ($\underline{D}$), on a receiving surface ($\underline{S}$), wherein the transportation means (2) cooperate with:

   (a) means (8) for determining the size ($\underline{F}$) of at least one portion of said foodstuff ($\underline{D}$) to be sliced,
   (b) means (3) for weighting said foodstuff ($\underline{D}$) to be sliced, arranged upstream from cutting means (4),
   (c) means (4) for cutting said foodstuff ($\underline{D}$) into slices ($\underline{T}$), along a cutting plane parallel to said receiving surface ($\underline{S}$), each having a determined thickness ($\underline{E}$),
   (d) means for individualising said slices ($\underline{T}$) obtained, and
   (e) control means (10) for piloting said installation (1), including data processing means (11) for determining the thickness ($\underline{E}$) of each of the slices ($\underline{T}$) to be cut out from said foodstuff ($\underline{D}$), taking into account said size ($\underline{F}$) determined by said size determination means (8) and a determined weight set-value ($\underline{Cp}$) for each of said slices ($\underline{T}$),

   **characterized in that** said data processing means (11) include means for determining, taking into account the weight ($\underline{P}$) of said foodstuff ($\underline{D}$) and a predetermined weight range ($\underline{Gp}$) for each of said slices ($\underline{T}$):

   - the number ($\underline{N}$) of slices ($\underline{T}$) to be cut out from said foodstuff (D), and
   - said weight set-value ($\underline{Cp}$) for each of said slices ($\underline{T}$), each weight set-value ($\underline{Cp}$) being comprised in said predetermined weight range ($\underline{Gp}$).

8. The installation according to claim 7, **characterized in that** the control means (10) include data processing means (11) for determining the thickness ($\underline{E}$) of each of the slices ($\underline{T}$) to be cut out from said foodstuff ($\underline{D}$) taking into account a volume set-value ($\underline{Cv}$) derived from the density ($\underline{Mv}$) of said foodstuff ($\underline{D}$) to be sliced and a weight set-value ($\underline{Cp}$) for said slice ($\underline{T}$).

9. The installation according to any one of claims 7 or 8, **characterized in that** said cutting means (4) include (i) several slicing members (5) and (ii) means (6) for adjusting the height of each of said slicing members (5) with respect to the transportation means (2) in order to define the thickness ($\underline{E}$) of each of the slices ($\underline{T}$).

10. The installation according to claim 9, **characterized in that** the slicing members (5) are arranged in series with respect to the transportation means (2).

11. The installation according to claim 10, **characterized in that** said size determination means (8) consist of sensing members (8) that are each arranged upstream from one of the slicing members (5) and that allow determining the surface size ($\underline{Fs}$) of the bearing face of said foodstuff ($\underline{D}$), or of the remaining portion ($\underline{D'}$) of said foodstuff ($\underline{D}$), which is in rest on the receiving surface ($\underline{S}$) constitutive of the transportation means (2), and **in that** each slicing member (5) provides a cutting plane parallel to said receiving surface ($\underline{S}$) to define between them the thickness ($\underline{E}$) of said slice ($\underline{T}$).

12. The installation according to claim 11, **characterized in that** the size determination means (8) consist of means for determining the volume size ($\underline{Fv}$) of said foodstuff ($\underline{D}$) to be sliced, which are arranged upstream from the cutting means (4).

13. The installation according to any one of claims 7 to 12, **characterized in that** it includes means (7) for vertically compressing said foodstuff ($\underline{D}$) at the cutting means (4).

**Fig. 1**

EP 2 540 462 B1

```
                        ┌─────────────────────────────────┐
                        │              -19-                │
                        │  Fourniture de la denrée à trancher │
                        └─────────────────────────────────┘
```

**-19-**
Fourniture de la denrée à trancher

**-21-**
Détermination du poids de la denrée à trancher

**-24-**
Détermination des dimensions

**-23-**
Détermination du nombre de tranches et du poids de chacune des tranches

**-25-**
Détermination de l'épaisseur d'une tranche fonction d'une consigne de poids

**-26-**
Coupe et individualisation de la tranche obtenue

# Fig. 2

**-19-**
Fourniture de la denrée à trancher

**-21-**
Détermination du poids de la denrée à trancher

**-24-**
Détermination des dimensions

**-23-**
Détermination du nombre de tranches et du poids de chacune des tranches

**-25-**
Détermination de l'épaisseur d'une tranche fonction d'une consigne de poids

**-26-**
Coupe et individualisation de la tranche obtenue

# Fig. 5

**Fig. 3A**

**Fig. 3B**

**Fig. 3C**

**Fig. 4**

EP 2 540 462 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060162518 A